# EUROPEAN PATENT SPECIFICATION

(11) **EP 2 453 385 B1**
(45) Date of publication and mention of the grant of the patent: **28.04.2021**
(21) Application number: 11008757.4
(22) Date of filing: 03.11.2011
(51) Int. Cl.: G06K 9/00, G06K 9/03

(54) **Personal identification device and method**
Vorrichtung und Verfahren zur Personenidentifizierung
Dispositif et procédé d'inspection de personnes

(30) Priority: 12.11.2010 JP 2010253386
(43) Date of publication of application: 16.05.2012
(73) Proprietor: Hitachi Industry & Control Solutions, Ltd., Hitachi-shi Ibaraki (JP)
(72) Inventor: Kiyomizu, Harumi, Tokyo 100-8220 (JP); Miura, Naoto, Tokyo 100-8220 (JP); Miyatake, Takafumi, Tokyo 100-8220 (JP); Nagasaka, Akio, Tokyo 100-8220 (JP); Matsuda, Yusuke, Tokyo 100-8220 (JP)
(74) Representative: Strehl Schübel-Hopf & Partner

(56) References cited:
- EP-A1- 1 990 771
- "Chapter 2: Biometric Modalities" In: Chuck Wilson: "Vein PatternRecognition: A Privacy-Enhancing Biometric", 3 October 2010 (2010-10-03), CRC Press, Boca Raton, FL, USA, XP002730862, ISBN: 978-1-4398-2137-4 page i-xi, 19-50, * the whole document *
- "Chapter 3: Anatomy of Biometric Systems" In: Chuck Wilson: "Vein PatternRecognition: A Privacy-Enhancing Biometric", 3 October 2010 (2010-10-03), CRC Press, Boca Raton, FL, USA, XP002730863, ISBN: 978-1-4398-2137-4 page i-xi,51-72, * the whole document *
- "Chapter 4: Vein Pattern Recognition Modality" In: Chuck Wilson: "Vein PatternRecognition: A Privacy-Enhancing Biometric", 3 October 2010 (2010-10-03), CRC Press, Boca Raton, FL, USA, XP002730864, ISBN: 978-1-4398-2137-4 page i-xi,73-110, * the whole document *
- "Chapter 7: Multibiometric Systems" In: Chuck Wilson: "Vein PatternRecognition: A Privacy-Enhancing Biometric", 3 October 2010 (2010-10-03), CRC Press, Boca Raton, FL, USA, XP002730865, ISBN: 978-1-4398-2137-4 page i-xi,169-192, * the whole document *
- Goh Kah Ong Michael ET AL: "A Contactless Biometric System Using Palm Print and Palm Vein Features" In: "Advanced Biometric Technologies", 9 August 2011 (2011-08-09), InTech, XP055071308, ISBN: 978-9-53-307487-0 DOI: 10.5772/19337, * the whole document *

## Description

### Background of the invention

### 1. Field of the Invention

The present invention relates to a personal identification device using a living body, and more particularly to an identification technique using a blood vessel pattern obtained by imaging light transmitted through a living body.

### 2. Description of the Related Arts

In these years, importance is placed on security for personal information. Attention is paid to biometric authentication for a personal identification technique to protect security. Biometric authentication is an authentication technique using human biometric information, which is excellent in convenience and confidentiality.

For a conventional biometric authentication technique, there is known authentication using fingerprints, irises, voices, faces, veins of the back of the hand, or finger veins. Among them, biometric authentication using veins is excellent in tamper resistance because the biometric authentication uses internal information of a living body.

In the following, biometric authentication using blood vessel patterns, more particularly a finger vein authentication device, will be described. The finger vein authentication device applies infrared light to a finger. The infrared light is scattered in the inside of the finger, and then transmitted to the outside. The finger vein authentication device images the infrared light transmitted through the palm surface of the finger. In this light transmission, hemoglobin in blood absorbs the infrared light more than the tissue therearound does. For this reason, the light transmitted through the palm surface of the finger has a contrast difference between a weak light that is decayed because the light is transmitted through a vein and a strong light that is not decayed because the light is transmitted through a portion with no veins. Thus, blood vessels (finger veins) distributed under the palm skin of the finger are visualized in dark shadow patterns (finger vein patterns) on the image imaged by the finger vein authentication device. The finger vein authentication device identifies individuals, in which the features of finger vein patterns of a user are registered in advance and the correlation is determined between the finger vein patterns of the user presented in performing identification and the features registered in advance.

Since the vein authentication device in the mode of shooting a transmitted light as described above can shoot sharp vein patterns at high contrast, the vein authentication device has advantages such as a high identification accuracy and a low failure-to-enroll rate (FTER).

For a conventional example of this type of finger vein authentication device, there is known an identification device described in Japanese Patent Application Laid-Open Publication No. 2004-265269 , for example. This device applies infrared light from the right and left side of a finger to shoot a finger vein image. Japanese Patent Application Laid-Open Publication No. 2009-172064 discloses a device and method of improving identification accuracy by removing finger wrinkle information from a shot image.

EP1990771A1 discloses a registration and identification apparatus that uses blood vessels for authentication. The Hough transform is used to quantify what type of linear component is dominant in an image of a finger, focusing on the fact that blood vessels in a finger image have high linearity. The results of the Hough transform analysis are used to determine the quality of the image, wherein the quality of the image increases when there is an adequate amount of blood vessel component corresponding to the linear component and a low amount of a noise component. In case of a low quality image, image registration stops and the user is notified that re-registration of the image needs to be made.

### Brief Summary of the invention

Although vein authentication using fingers or palms is known as authentication with a low failure-to-enroll rate, it is known that there are rare fingers or the like unsuitable for vein authentication. The finger unsuitable for identification is a finger whose vein patterns are difficult to be shot sharply.

As described above, in blood vessel pattern identification, in the case where a finger is used for identification, light transmitted through the palm skin of the finger is shot. In this shooting, since the light is scattered in the process of the light being transmitted through the skin if the palm skin is thick, the contrast of the blood vessel pattern such as veins becomes weak. Thus, sharp blood vessel patterns cannot be shot. In addition, a fingerprint pattern on the palm skin surface sometimes appears in shooting blood vessel patterns. This is because the light transmittance is different between the ridge and valley of the fingerprint. The difference in the quantity of transmitted light becomes larger as wrinkles on the fingerprint become deeper, so that a fingerprint pattern more appears.

Generally, dry fingers and rough fingers have hard, thick skins. Thus, sharp patterns cannot be shot. Dry fingers and rough fingers often have a deep valley between the projections and depressions of the fingerprint. Thus, the fingerprint also appears in shooting veins. Therefore, accuracy is reduced if identification is performed on such fingers.

However, conventional identification devices do not have a function of evaluating whether a user's finger is a finger suitable for vein authentication. Thus, a user or an administrator cannot notice the registration of data of a finger unsuitable for identification even in the case where the data is registered. Therefore, it is impossible to take measures such as canceling registration processing and restarting registration procedures using a different finger.

It is an object of the present invention to provide a personal identification device and a personal identification system that can evaluate the suitability of a finger for vein authentication, and an arithmetic and logic unit that performs personal identification, in order to implement a highly accurate identification device.

The personal identification device and the personal identification system of the present invention are defined in the respective independent claims. Further advantageous features are set out in the dependent claims.

According to the present invention, it is possible to provide an identification device and system with excellent usability that can evaluate the suitability of a user for personal identification based on body surface information and blood vessel information in consideration of the evaluated result of suitability. In addition, it is also possible to select a portion the most suitable for identification from the portions of a living body that are registration candidates, so that it is possible to perform highly accurate identification.

### Brief description of the drawings

The present invention will become fully understood from the detailed description given hereinafter and the accompanying drawings, wherein:
Figs. 1A and 1B are schematic diagrams illustrating the configuration of a finger vein authentication system according to a first embodiment of the present invention;
Figs. 2A to 2D are diagrams illustrating the form of a data capture device according to the first embodiment;
Fig. 3 is a diagram illustrative of a registration process performed by a program according to the first embodiment;
Fig. 4 is a diagram illustrative of an identification process performed by the program according to the first embodiment;
Fig. 5 is a diagram illustrative of a light quantity adjusting process;
Fig. 6 is a diagram illustrating exemplary vein images shot at the data capture device;
Fig. 7 is a diagram illustrating an exemplary matching rate changing over time after registration;
Fig. 8 is a diagram illustrating exemplary vein images shot at the data capture device;
Fig. 9 is a diagram illustrative of a process of evaluating the identification suitability of a finger performed by the program according to the first embodiment;
Fig. 10 is a diagram illustrative of a wrinkle level calculating process performed by the program according to the first embodiment;
Fig. 11 is a diagram illustrative of a blood vessel level calculating process performed by the program according to the first embodiment;
Figs. 12A and 12B are diagrams illustrating methods of calculating wrinkle level and blood vessel level according to the first embodiment;
Fig. 13 is a diagram illustrating procedures of calculating wrinkle level according to the first embodiment;
Fig. 14 is a diagram illustrating procedures of calculating blood vessel level according to the first embodiment;
Fig. 15 is a diagram illustrating a method of calculating the identification suitability level of a finger according to the first embodiment;
Figs. 16A to 16C are diagrams illustrating an exemplary vein image shot at the data capture device;
Figs. 17A to 17C are diagrams illustrating an exemplary vein image shot at the data capture device;
Fig. 18 is a diagram illustrative of a registration process;
Fig. 19 is an exemplary scatter diagram illustrating the relation between the matching rate and the identification suitability level of a finger on the day of registration;
Figs. 20A to 20F are diagrams illustrating an exemplary vein image shot at a data capture device;
Fig. 21 is a diagram illustrative of an identification process; and
Fig. 22 is a diagram illustrating an exemplary matching rate changing over time after registration.

### DETAILED DESCRIPTION OF THE INVENTION

In the following, embodiments of the present invention will be described with reference to the drawings.

### First Embodiment

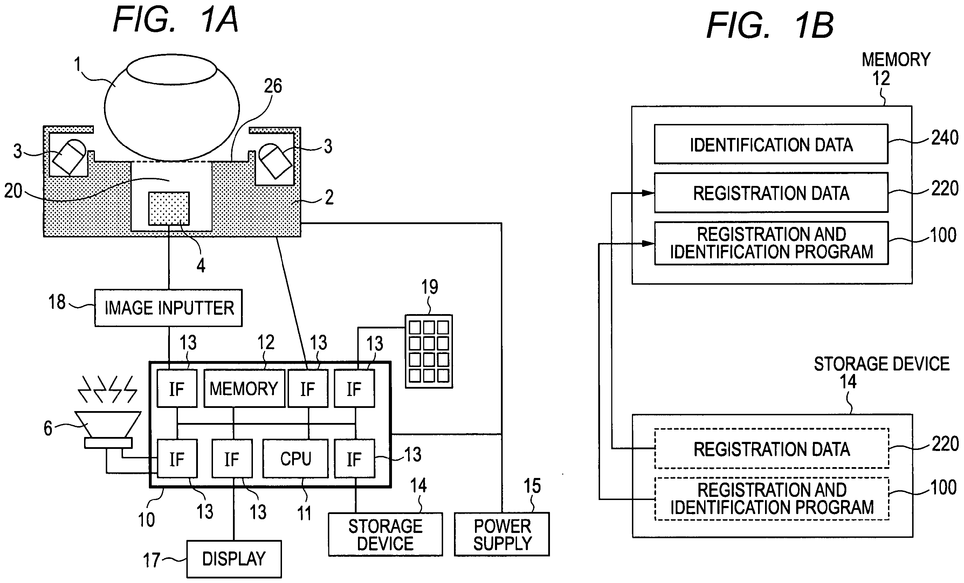

Fig. 1A is a block diagram illustrating an identification system according to a first embodiment. This identification system is a blood vessel image extractor, including a data capture device 2 that captures an image including blood vessel patterns such as veins of a living body, an image inputter 18, an identification processor 10, a storage device 14, a display 17, an information inputter 19, a sound outputter 6, and a power supply 15.

The data capture device 2 is a single cabinet, having a light source 3, an imager 4, and a finger stage 26. The light source 3 is an infrared light emitting diode (LED), for example, which applies infrared light to a finger 1 presented on the finger stage 26. The imager 4 images the presented finger 1.

The image inputter 18 inputs the image imaged at the imager 4 to the identification processor 10 that functions as a processor. It is noted that such a configuration is also possible that the image inputter 18 performs a process of extracting a blood vessel pattern image from the image imaged at the imager 4 and the extracted blood vessel pattern image is inputted to the identification processor 10.

Of course, such configurations are also possible that a blood vessel image extractor is integrally formed of the image inputter 18 and the data capture device 2, and that the image inputter 18 is integrally formed with the identification processor 10.

The identification processor 10 includes a central processing unit (CPU) 11, a memory 12, and various interfaces (IFs) 13. The CPU 11 executes a program 100 stored in the memory 12 to perform various processes. The memory 12 stores images inputted from the image inputter 18. The memory 12 temporarily stores the program 100 executed by the CPU 11. The interfaces 13 are connected to the external devices of the identification processor 10. More specifically, the interfaces 13 are connected to the data capture device 2, the storage device 14, the display 17, the information inputter 19, the sound outputter 6, the image inputter 18, and so on.

The storage device 14 stores registration data 220 of a user and the program 100. Registration data 220 shown in Fig. 1B is information to verify the user, which is the image of blood vessel patterns or the like, for example. The image of the blood vessel patterns is an image that blood vessels distributed under the palm skin of the finger are imaged in dark shadow patterns.

The display 17 is a liquid crystal display or the like, for example, which displays information received from the identification processor 10. The information inputter 19 is a keyboard, a touch panel, or the like, for example, which sends information inputted from the user to the identification processor 10. The sound outputter 6 is a speaker or the like, which provides information received from the identification processor 10 in sounds. The power supply 15 is a dry battery or an external power supply, which supplies power to drive the data capture device 2 and the identification processor 10.

In the following, an example is mainly explained in which a finger is used for a living body portion and vein patterns are used for blood vessel patterns. However, it is without saying that the blood vessel patterns of the palm may be used, and other portions of the living body may be used.

In this identification system, when the user presents the finger 1 on the data capture device 2, infrared light is applied from the light source 3 to the finger 1. The light is scattered in the inside of the finger 1, and the light transmitted through the finger 1 enters the imager 4. The incident light is converted into electric signals at the imager 4, and captured as an image at the identification processor 10. The captured image is stored in the memory 12. The registration data 220 and the program 100 stored in the storage device 14 are stored from the storage device 14 into the memory 12 (Fig. 1B). The CPU 11 creates identification data 240 from an inputted image according to the program 100 stored in the memory 12 to verify the identification data 240 against the registration data 220. In the verification process, the correlation between two items of data in comparison is calculated to determine whether the identification data 240 is matched with the registered data depending on the correlation value. This determined result is used to identify an individual. The identified result is displayed on the display 17, or noticed in sounds from the sound outputter 6.

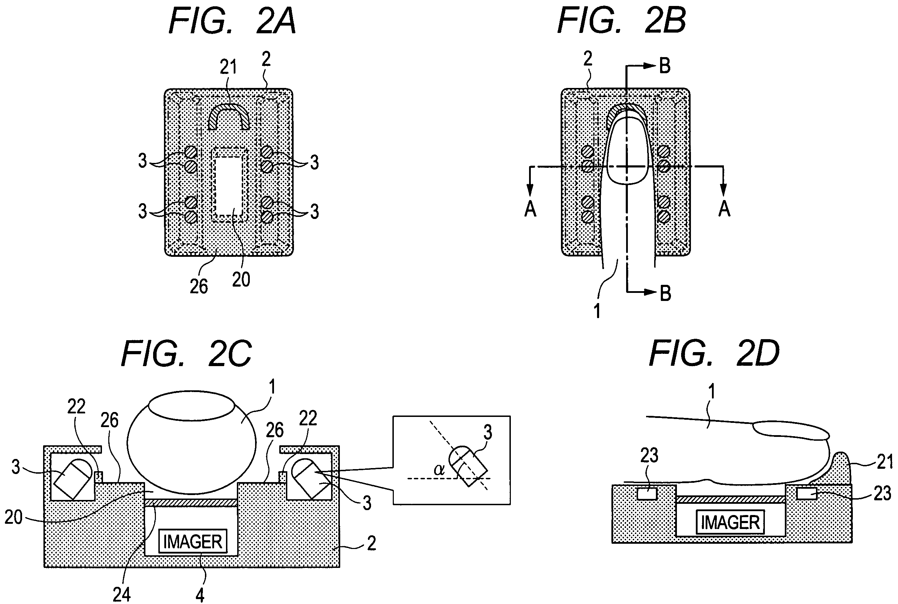

Figs. 2A to 2D are diagrams illustrating the appearance of the data capture device 2 according to the first embodiment. Fig. 2A is a top view illustrating the device 2, Fig. 2B is a top view illustrating the device 2 on which a finger is presented, Fig. 2C is a cross sectional view on a line A-A in Fig. 2B, and Fig. 2D is a cross sectional view on a line B-B in Fig. 2B.

On the top side of the cabinet of the device 2, the finger stage 26 is provided to form a presentation region in which the user guides the finger for identification to an imaging region. An opening 20 is formed in the finger stage 26. Although a living body portion is contacted with the finger stage 26 to also facilitate positioning, the living body portion is not necessarily contacted with the finger stage 26. It is sufficient that the finger is presented on the inside of the imaging region.

The opening 20 may be provided with an infrared transmission filter 24 in such a way that the infrared transmission filter 24 covers the opening 20. It is possible to prevent unnecessary light other than infrared light from entering the device by providing the infrared transmission filter 24. In addition, it is possible to prevent foreign substances such as dust or contaminants from entering the device. It is sufficient that the filter 24 is provided at a position a few millimeters lower than the finger stage 26 to prevent the finger 1 from contacting with the filter 24. Thus, it is possible to prevent the blood vessel pattern from disappearing or deforming by pressing a finger. In addition, it is possible to prevent the filter 24 from being contaminated. The imager 4 is provided right below the opening 20.

When the finger 1 is presented, the light source 3 formed of one or plural light source elements applies infrared light to the finger 1. When the light reaches the inside of the finger, the light is scattered in every direction. The light scattered in the inside of the finger partially reaches an area above the opening 20, and the light reaching the area partially travels from the inside of the finger toward the outside of the finger. The light passes through the opening 20 and the filter 24, and is shot with the imager 4. Since the light is transmitted from the inside of the finger 1 through the palm surface of the finger 1, the light has a contrast difference between a weak light that is decayed because the light is transmitted through veins and a strong light that is not decayed because the light is transmitted through portions with no veins. Thus, when the light is imaged, an image of finger vein patterns in a partial region positioned right above the opening 20 appears. Therefore, the finger vein patterns in the partial region of the finger 1 are acquired.

In order to shoot a sharp image of the partial region of the finger 1 positioned above the opening 20, that is, to shoot finger vein patterns sharply, it is necessary to satisfy the optical conditions below. First, it is prevented to shoot the reflected light of the light applied from the outside of the finger to a portion of the skin surface that is to be shot. Secondly, it is prevented to shoot the scattered light that does not arrive at the depth where finger veins exist. If the conditions are not satisfied, the light with no information about finger vein patterns reduces the contrast between the finger vein and the living body tissue other than the finger vein. It is difficult to see finger vein patterns because unnecessary images such as wrinkles on the finger surface appear sharply. Therefore, the size of the opening 20 is made smaller than the width and length of the finger 1 to completely cover the opening 20 with the finger 1 when the user presents the finger 1. Thus, it is possible to prevent the light that is not transmitted through the finger from directly entering the device.

The device 2 may be provided with a projection 21 to position the finger 1. The projection 21 is provided to allow the user to present the finger with the fingertip aligned at the projection 21 (Fig. 2D). The projection 21 can prevent the finger 1 from being placed at a position shifted from the specified position.

Although the position of the opening 20 is located in the region in which the finger is presented, desirably, the opening 20 is provided at the position at which the first joint of the finger and the portion therearound can be shot when the user places the finger aligned at the projection 21. This is because the skin on the finger joint portion is thinner than the skins on the other portions and veins tend to be shot.

A touch sensor 23 may be provided on the fingertip side and finger base side of the finger stage 26. The touch sensors 23 is provided to allow a detection that the user's finger is presented.

The device 2 is provided with the infrared source 3 used for shooting veins. The infrared source 3 is formed of one or plural light source elements such as LEDs.

The position of disposing the light source is on the lateral sides in the region in which the finger 1 is presented (in the major axis direction of the finger). For the height and angle of disposing the light source, preferably, the light source is disposed at a position lower than the half of the height of the finger. In disposing the light source, an angle α at which the light source is disposed ranges from 0 < α < 90 degrees, and light is applied diagonally upward. As described above, it is possible to reduce the thickness of the device by lowering the position of disposing the light source. The light source is disposed on the right and left side of the finger as tilted diagonally upward, so that light can be applied to a high position of the finger. Thus, it is possible to shoot a sharp vein image. It is noted that it is desirable to provide the position of disposing the light source on the outside of the finger width of the finger 1. Thus, it is possible to apply light to the upper surface of the finger 1, that is, the back of the finger. If the light source is disposed on the inner side of the finger width, light is applied to the palm side of the finger 1, that is, the palm surface of the finger, so that the sharpness of the shot image is reduced.

The arrangement of the light source is not limited to disposing the light source on the lateral sides. The number of the light sources may be one or plurals. The light source may be disposed at a position above the presentation region for the living body (at a position opposite the surface on which the device is provided), or may be disposed at a position below the disposed presentation region for the living body. The light source may be disposed on the back side of the presentation region for the living body when seen from the user side.

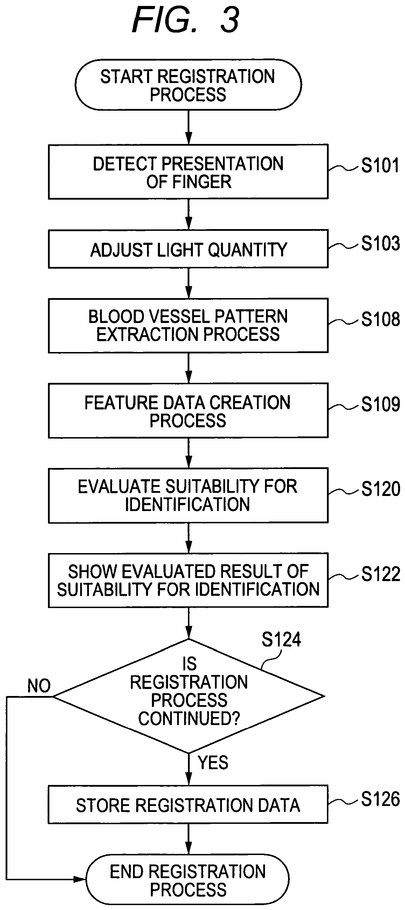

In the following, an embodiment of the procedure of a registration process performed by the program 100 that the CPU 11 executes will be described with reference to Fig. 3. In the registration process, first, a finger presentation detection process (S101) is performed in which it is determined whether a finger is presented (placed) on the inside of the imaging region of the device. If the finger is presented, a light quantity adjusting process (S103) is performed for applying an appropriate light quantity from the light source. After completion of adjusting the light quantity, a pattern extraction process (S108) and a feature data creation process (S109) are performed. Subsequently, the identification suitability of the finger targeted for registration is evaluated (S120).

In other words, the CPU 11 is a processor that functions as a feature extractor and a feature verifier as well as a light quantity controller and an evaluator to evaluate the identification suitability of a finger. After evaluating the identification suitability of the finger, the identification device presents the evaluated result to the user (S122). The user sees the presented evaluated result to select whether to continue the registration process as is or to cancel the registration process. If the user selects to continue the registration process, the identification system stores feature data created in the feature data creation process (S109) in the storage device 14 to complete the registration process. If the user selects to cancel the registration process, the identification system discards feature data to end the registration process.

The flow may be performed at the identification processor 10, or may be shared with the image inputter in such a way that the processes in S101 to S108 are performed at the image inputter 18.

In the following, the detail of the flow will be described.

First, the finger presentation detection process (S101) will be described. The finger presentation detection process is a process that determines whether the finger is presented on the inside of the imaging region in the device 2. For the method of determination, such methods can be used: a method of using the touch sensors 23 or optical sensors disposed on the finger stage 26; a method according to image processing; and a method of combining the touch sensors and image processing.

Here, an exemplary method according to image processing will be described. The method according to image processing is advantageous in that sensors for detecting the finger are unnecessary and the number of parts is reduced to curtail costs. First, the light source 3 used for lighting for shooting finger vein patterns is caused to flash at fixed intervals. In the case where nothing is placed on the device 2, there is no object to scatter light even though the light source 3 is lit or put out, so that the light emitted from the light source 3 does not appear in the imager 4. Thus, in the case of comparing the images of the imager 4 between the state in which the light source 3 is lit and the state in which the light source 3 is put out, the luminance values are not changed much.

On the other hand, in the case where the finger 1 is presented on the device, the light applied from the light source 3 is scattered by the finger 1 and appears in the imager 4. Thus, the luminance values are greatly changed in the images between the state in which the light source 3 is lit and the state in which the light source 3 is put out. Therefore, the amount of a change in the images shot when the light source 3 is lit and when the light source 3 is put out is sent to the identification processor 10 through the image inputter 18, and the amount is calculated at the CPU 11 for storage, so that it is possible to detect the presentation of the finger.

When the presentation of the finger is detected, the light source 3 outputs a light quantity for illumination. The light quantity necessary for shooting veins is varied depending on the thickness of the finger to be presented, the thickness of the skin, or the like. Therefore, the light quantity of the light source 3 is adjusted so as to obtain the sharpest image (S103). In shooting finger veins, in the case where the average luminance value of the shot image is at the value around the center of the luminance tones, a sharp image can be obtained. For example, when the average luminance value of the image is too low, the image is not sharp because the contrast between blood vessels and the others is poor. On the contrary, when the average luminance value is too high, no blood vessel patterns can be extracted because saturated portions are produced. In other words, in the light quantity adjusting process (S103), the light quantity is adjusted in such a way that a target luminance value is set to the median of the luminance tones and the average luminance value of the shot image comes close to the target value. For the scheme of adjusting the light quantity, a scheme in which the average luminance value of the image is always monitored and the average luminance value is brought close to the target luminance value while the light quantity is feedback-controlled depending on the value is used.

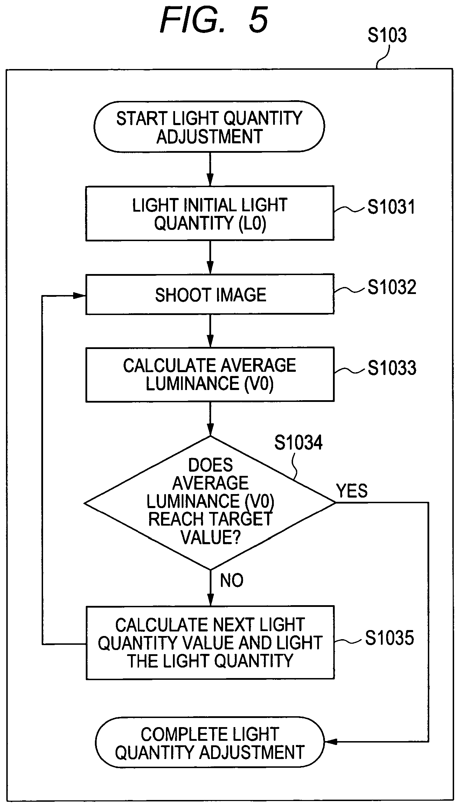

Fig. 5 shows a flow chart illustrating the light quantity adjusting process (S103). Immediately after detecting the presentation of the finger, the light source 3 is lit at a preset initial light quantity value L0 (S1031). For the initial light quantity value L0, a light quantity value is measured in advance that an image at a target luminance value is photographable when a typical finger is placed, and this value is set. Subsequently, an image is shot with the imager 4 (S1032). The average luminance value VO of this image is calculated (S1033). It is determined whether the calculated average luminance value V0 is the target luminance value (S1034). If the calculated average luminance value VO does not reach the target luminance value, the next light quantity value is again set, and the light source 3 is lit (S1035). The next light quantity value is calculated using the feature that the light quantity value and the average luminance value of the shot image are in proportion to each other. After the light quantity value is again set, the process steps are again performed, in which an image is shot (S1032), the average luminance value is calculated (S1033), and the average luminance value is determined (S1034). The flow is repeated to bring the average luminance value close to the target luminance value. If the average luminance value reaches the target luminance value in the step of determining the average luminance value in S1034, adjusting the light quantity is completed.

Subsequently, the blood vessel pattern extraction process is performed (S108). The blood vessel pattern extraction process (S108) is a process in which information unnecessary for identification (such as noise or wrinkles) is removed from the image shot with the imager 4 and only blood vessel patterns are extracted. For the method of extracting blood vessel patterns, the following method can be used: a method of using an edge enhancement filter that enhances lines or using a matched filter; a method of extracting line patterns by tracking line components; a method of extracting positions of local hollows in the luminance value in the cross sectional profile of an image, and so on.

After extraction, feature data is created from the extracted result (S109). For the feature data, such methods can be used that the image of the result of feature extraction itself is to be a feature amount, and that branch points or endpoints are detected, and so on. In the case where the image itself is to be a feature amount, it may be possible to apply a downscaling process to the image after extracting features in order to reduce the capacity of the data size.

Subsequently, the identification suitability of the finger to be registered is evaluated (S120). The process of evaluating identification suitability (S120) is a process that evaluates whether the finger 1 presented on the device 2 is suitable for finger vein authentication to what extent.

For the scheme of evaluating suitability for identification, there are a method of using the image shot with the imager 4 in the course of the light quantity adjusting process (S103) or when completing the light quantity adjusting process, and a method of using feature data created in the feature data creation process (S109), and so on. In the case of using the image shot with the imager 4, attention is focused on wrinkles, noise, contamination, blood vessel patterns, or the like in the shot image for evaluating the suitability of the finger. In the case of using feature data for evaluating suitability for identification, attention is focused on wrinkles, noise, contamination, or the like remaining in feature data and the extracted blood vessel patterns for evaluating suitability. Although wrinkles or the like are removed in the feature data process (S109), it is difficult to completely remove all the wrinkles or the like. In some cases, the wrinkles removal process is simplified or omitted in order to shorten processing time. Thus, wrinkles or the like are sometimes included in feature data as well. For this reason, wrinkles or the like remaining in feature data and blood vessel patterns are detected to evaluate the suitability of the finger.

The result calculated by the CPU 11 in the process of evaluating identification suitability (S120) may be two-step results of the presence or absence of suitability for identification, or may be results that results are sorted into multiple levels depending on the degree of suitability for identification to determine in which level results fall.

When the process of evaluating the identification suitability of a finger (S120) is completed, the identification system then presents the evaluated result to the user (S122). In the presentation process of the evaluated result (S122), the result evaluated at the CPU 11 is sent to the display 17 or to the sound outputter 6 through the IF 13, and the result is presented to the user through the display 17 or the sound outputter 6.

The user or the administrator of the identification system selects whether to continue the registration process through the information inputter 19, based on the presented result (S124). For example, if the result presents a determination that the finger is not suitable for identification, the user can decide to select whether to end the registration process. After ending the registration process, it is also possible to restart the registration process to again perform the registration process using another finger. The user can send the result of deciding whether to cancel the registration process to the identification system using the information inputter 19.

If the user selects to cancel the registration process, the identification system discards feature data to end the registration process. If the user selects to continue the registration process in the process S124, the process step goes to a registration data storage process (S126).

In the registration data storage process (S126), the feature data created in the feature data creation process (S109) is stored in the storage device 14. It is noted that feature data may be encrypted before stored.

As discussed above, the identification suitability of a finger is evaluated and the result is presented, so that it is possible to tell the user the features of the finger to be registered. If it is determined that the finger under the registration process is a finger unsuitable for identification, the administrator or the user can cancel the registration process and again make registration with another finger. Thus, it is possible to prevent a finger unsuitable for identification from being registered, and it is possible to implement a highly accurate identification system. Alternatively, it is also possible that all the fingers for registration candidates are in turn presented on the device to confirm the evaluated results of the suitability of all the fingers and a finger determined as the most suitable finger for vein authentication is registered. Therefore, it is possible to register the finger more suitable for identification, and it is possible to implement a highly accurate identification.

In order to allow the user to select the better finger from plural registration candidate fingers, desirably, the results calculated in the process of evaluating the identification suitability of a finger (S120) are sorted into multiple levels.

As described above, plural fingers suitable for registration can be presented as the quality is sorted, so that it is possible to allow the user to select a finger easy to use.

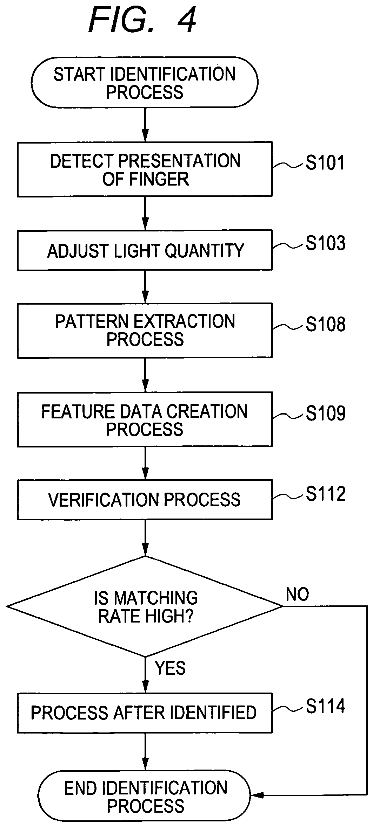

In the following, an embodiment of the procedure of an identification process performed by the program 100 will be described with reference to Fig. 4.

In the identification process, the finger presentation detection process (S101), the light quantity adjusting process (S103), the pattern extraction process (S108), and the feature data creation process (S109) are performed. After performing the processes, a verification process (S112) is performed in which the finger is verified against preregistered feature data to determine whether the finger is registered.

In the procedure of the identification process, schemes similar to the registration process are used for four processes, the finger presentation detection process (S101), the light quantity adjusting process (S103), the pattern extraction process (S108), and the feature data creation process (S109). In the following, the verification process (S112) will be described.

In the verification process (S112), feature data created in the feature data creation process (S109) under the identification process is compared and verified against feature data created and stored when registered. In the case where the image itself is feature data, images are overlaid with each other and pixel values are compared to calculate a matching rate. In the case where branch points or endpoints are feature data, items of information such as positions of the points, the number of the points, the angle of a branch line, and a relative distance are compared to calculate a matching rate. The matching rate obtained here is used to determine whether the finger is the same or a different finger. It is possible to statistically calculate an identification threshold 33 for determination in advance. If the matching rate is higher than the identification threshold 33, it is determined that the finger belongs to a registrant, whereas if the matching rate is lower than the identification threshold 33, it is considered that a finger not registered is presented, and the finger is rejected for identification.

If it is determined as a registrant, a lock is cleared, for example, for the process after identified (S114).

In the following, the process of evaluating the identification suitability of a finger (S120) will be described. The process of evaluating identification suitability (S120) is a process that evaluates whether the finger 1 presented on the device 2 is suitable for finger vein authentication to what extent. In this embodiment, a finger that false rejection does not tend to occur even though the finger is verified after a long time since the registration date refers to a finger suitable for identification.

Here, the features of the finger suitable for identification will be described. The image shot at the vein data capture device 2 includes information that tends to change and information that does not tend to change over time or by an external environment, for example.

For example, body surface information such as fingerprints, wrinkles, cut marks, and contamination on the finger surface in the shot image, camera noise, or the like is information that changes over time or information that changes by the variation in an external environment.

For wrinkles, the shape of a wrinkle itself changes over time. The finger is sometimes shot sharply or blurred depending on the way to place the finger or lighting.

On the other hand, blood vessel information based on blood vessel patterns does not tend to change over time because the information is information about the inside of the finger. Particularly, blood vessels with wide width or blood vessels appearing dark do not change so much over time, and do not tend to be affected by an external environment.

When a finger including more information (wrinkles or fingerprints) that tends to change is registered and verified, false rejection occurs because the matching rate of features between when the finger is registered and when the finger is verified becomes low. On the contrary, in the case where a finger including more information that does not tend to change is verified, false rejection does not occur because the matching rate of features between when the finger is registered and when the finger is verified becomes high. In other words, the finger suitable for identification is a finger including features that do not tend to change more than features that tend to change.

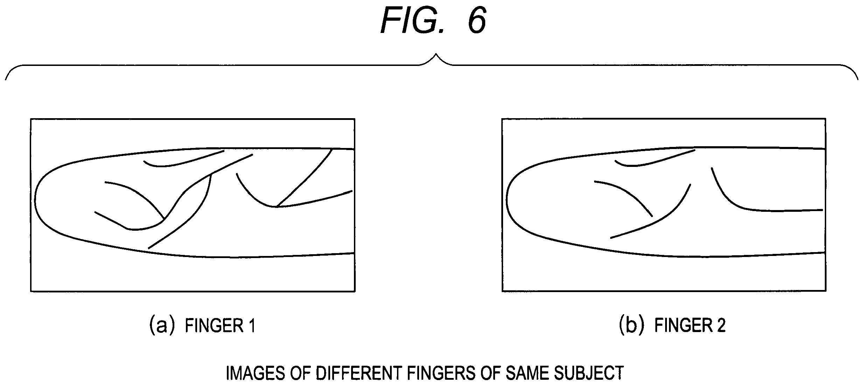

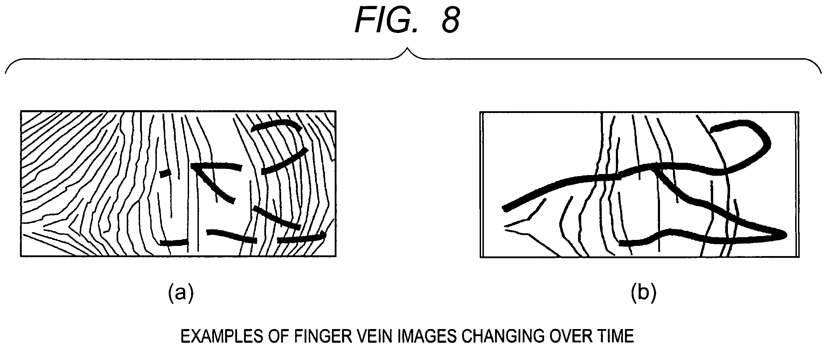

Fig. 6, and Fig. 8 show specific examples of a finger suitable for identification and a finger unsuitable for identification.

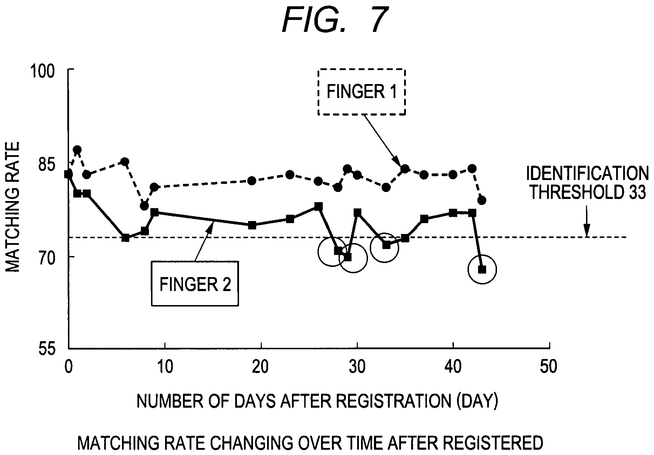

Fig. 6 shows vein images of different fingers of the same subject shot at the same device on the same day. In Fig. 6(a), blood vessel patterns appear sharply. On the contrary, in Fig. 6(b), blood vessel patterns are blurred. Fig. 7 shows results that the matching rates of these two fingers are measured at regular time intervals. Since the identification threshold 33 is set to a value of a matching rate of 74% in the identification system for use in measurement, it is determined that the finger is a different finger when the matching rate is below 74%. Fig. 7 reveals that the matching rates of a finger 1 and a finger 2 change over time. However, the matching rate of the finger 1 with sharp blood vessel patterns constantly shows high values, showing that the finger 1 can be stably identified. In contrast to this, the finger 2 has the matching rate at the point encircled below a matching rate of 74% for the identification threshold 33, showing that the finger 2 cannot be identified. These reveal that the finger with sharp blood vessel patterns can be stably identified with no influence of time or an external environment. It is noted that the mean value of the matching rate of the finger 1 was 82% and the mean value of the matching rate of the finger 2 was 73%.

Fig. 8 shows examples of fingers unsuitable for identification for a long-term operation. Fig. 8 shows images that the same finger is shot. The two images are shot on different days. Fig. 8(b) is the image shot about a month after the image of Fig. 8(a) is shot. Patterns of wrinkles and fingerprints clearly appear in the image of Fig. 8(a). However, wrinkles rarely appear in the image of Fig. 8(b). This is resulted from influence of time or an external environment. The matching rate between the images of Figs. 8(a) and 8(b) was 56%. Since the identification threshold 33 is set to a matching rate of 74% in the identification device according to the first embodiment, it is determined that the finger in Fig. 8(a) and the finger in Fig. 8(b) are different fingers. From the description above, since the finger that only wrinkles clearly appear as shown in Fig. 8(a) is not preferable for the finger to be registered because the finger changes as shown in Fig. 8(b).

Also from the specific examples shown in Fig. 6, and Fig. 8, it can be said that a finger not including features that tend to change such as wrinkles and having many blood vessel patterns to be shot is more suitable for identification. Therefore, in the process of evaluating the identification suitability of a finger (S120), wrinkles and blood vessels in the image shot when registered are evaluated to calculate the degree of suitability for identification.

In this embodiment, two values are defined, "wrinkle level" and "blood vessel level". The wrinkle level is a value indicating the amount and darkness of wrinkles or the like in a shot image. The wrinkle level becomes high as many wrinkles appear in the image. The blood vessel level is a value indicating the amount and darkness of blood vessels in a shot image. The blood vessel level becomes high as many blood vessels appear darkly and sharply.

The finger is more unsuitable for identification as the wrinkle level is higher. The finger is more suitable for identification as the blood vessel level is higher. Thus, the value (the identification suitability level) calculated in the process of evaluating the identification suitability of a finger (S120) can be expressed as below using the wrinkle level and the blood vessel level.

Identification suitability level of a finger = m × blood vessel level - n × wrinkle level (Equation 1)

As expressed by Equation (1), the wrinkle level to adversely affect identification and the blood vessel level to favorably affect identification are combined for evaluation, so that it is possible to accurately evaluate the identification suitability of a finger.

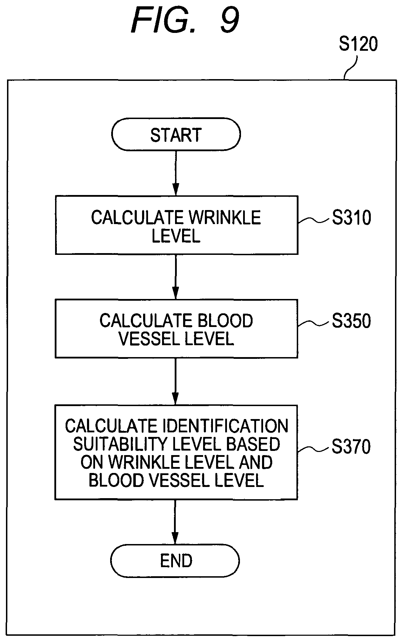

Fig. 9 shows the procedure of the process of evaluating the identification suitability of a finger (S120). First, the wrinkle level is calculated (S310), and then the blood vessel level is calculated (S350). Lastly, the evaluated result of suitability for identification is calculated based on Equation (1) for the identification suitability level of a finger (S370).

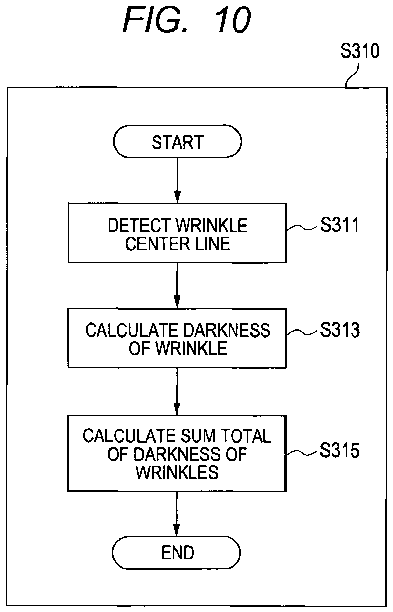

Fig. 10 shows the procedure of the wrinkle level calculating process (S310). The wrinkle level calculating process (S310) is a process performed to an image shot after completion of adjusting the light quantity. First, the center position of a wrinkle is detected (S311), and the darkness of the detected wrinkles is then calculated (S313). Lastly, the sum total of the darkness of all the wrinkles in the image is found (S315). In the following, the detail of the wrinkle level calculating process will be described.

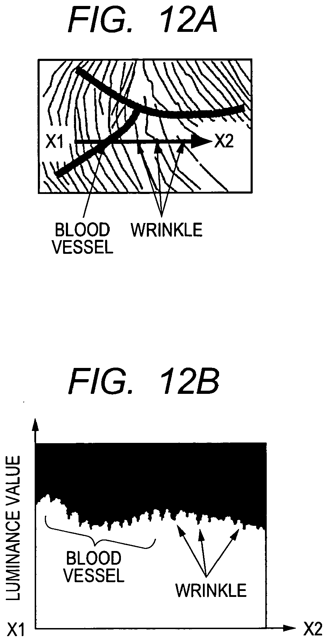

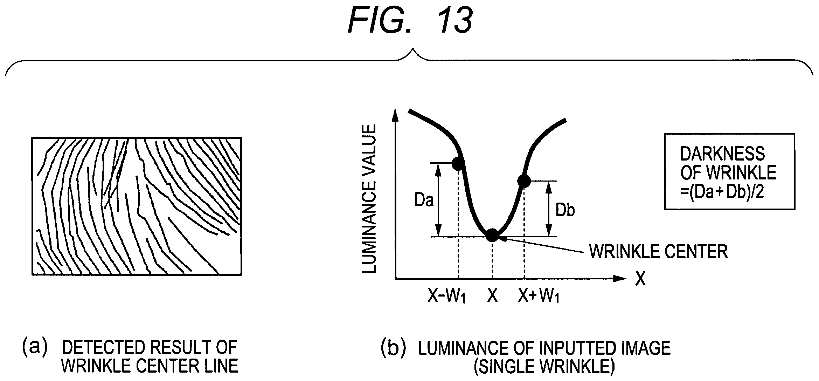

First, the center position of a wrinkle is detected (S311). A method of detecting the center of a wrinkle will be explained as an image shown in Fig. 12A is taken as an example. Fig. 12A is an exemplary vein image shot at the device 2. Fig. 12B is a graph illustrating the luminance value on a straight line x1-x2 in the image shown in Fig. 12A. In the image shown in Fig. 12A, wrinkles or the like of the finger also appear other than blood vessel patterns. The wrinkles are observed as thin black lines on the image shown in Fig. 12A. The thin black lines correspond to narrow hollows on the image on the graph of Fig. 12B. Thus, it is sufficient that narrow hollows are detected on the luminance graph of Fig. 12B in order to detect wrinkles. The result of detecting the center position of a wrinkle from the image shown in Fig. 12A is as shown in Fig. 13(a).

Subsequently, the darkness of a wrinkle is calculated (S313). The depth of a hollow on the graph of Fig. 12B is deep in wrinkles appearing darkly on the image shown in Fig. 12A. In other words, the darkness of a wrinkle is proportional to the depth of a hollow of a wrinkle. Therefore, in the process of calculating the darkness of a wrinkle (S313), the depth of a hollow of a wrinkle detected in the wrinkles detecting process (S311) is calculated. Fig. 13(b) is a graph of an enlarged hollow of a single wrinkle in the luminance graph of Fig. 12B. As shown in Fig. 13(b), a difference in luminance between the center point of a wrinkle and a right and left point ±w1 pixels apart from the center was calculated, and this difference was determined as the depth of the wrinkle. In the process of calculating the darkness of a wrinkle (S313), the darkness of all the wrinkles in the image, that is, the depth of a hollow of all the wrinkles is individually found.

Lastly, the sum total of the darkness of all the wrinkles in the image is calculated, and the calculated value is to be the wrinkle level (S315).

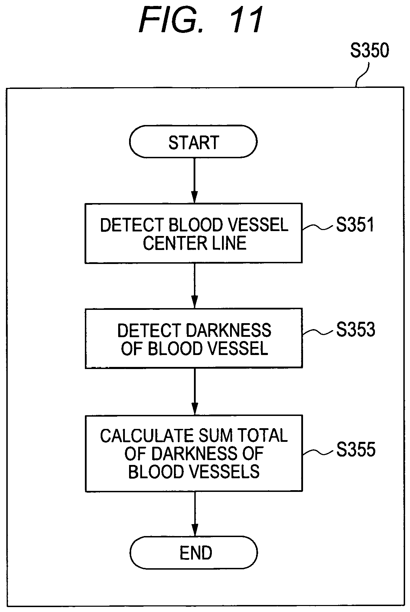

Fig. 11 shows the procedure of the blood vessel level calculating process (S350). First, the center position of a blood vessel is detected (S351), and then the darkness of the detected blood vessel is calculated (S353). Lastly, the sum total of the darkness of all the blood vessels in the image is found (S355). In the following, the detail of the blood vessel level calculating process will be described.

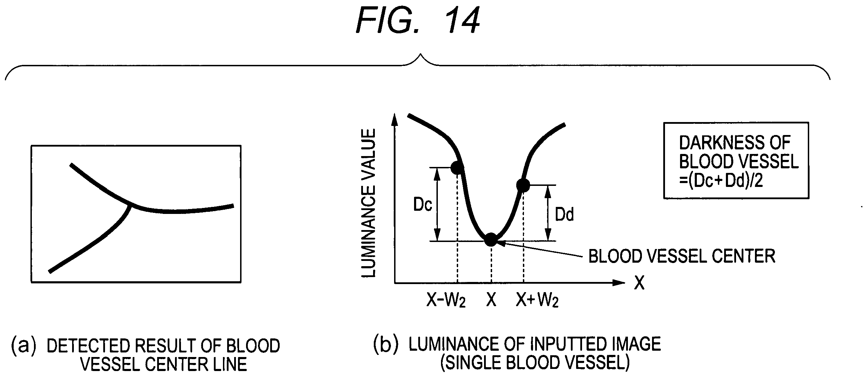

First, the center position of a blood vessel is detected (S351). Blood vessels are observed as thick black lines on the image shown in Fig. 12A. Thick black lines correspond to the positions of wide hollows on the graph of Fig. 12B. Thus, it is sufficient that a wide hollow is detected on the luminance graph of Fig. 12B in order to detect a blood vessel. The result of detecting the center position of a blood vessel from the image shown in Fig. 12A is as shown in Fig. 14(a).

Subsequently, the darkness of the blood vessel is calculated (S353). For calculating the darkness of the blood vessel, the method of calculating the difference in luminance between the center point of a wrinkle and a right and left point a certain distance apart from the center can be used as similar to calculating the darkness of a wrinkle (S313) (Fig. 14(b)).

Lastly, the sum total of the darkness of all the blood vessels in the image is calculated, and the calculated value is to be the blood vessel level (S355).

In the following, a method of determining parameters m and n, which are parameters of Equation (1) for calculating the identification suitability level, will be explained. The purpose of the identification suitability level of a finger is to estimate the tendency that false rejection does not occur for a long-term operation. Therefore, registered images of plural fingers and verified results for a long time are collected for samples in advance, in order to determine the parameters m and n. The tendency of each individual finger that false rejection does not occur is calculated based on the collected verified results. The tendency that false rejection does not occur refers to the success rate of identification and the matching rate when verified. Subsequently, the identification suitability level of each individual finger is calculated from the collected registered images according to Equation (1). The values of the parameters m and n are adjusted in such a way that the correlation between the calculated identification suitability level and the tendency that false rejection does not occur becomes high. The parameters m and n at the higher correlation are to be the final parameter values for Equation (1).

When the parameters m and n are adjusted to appropriate values, it is possible to increase the correlation between the identification suitability level of a finger and the tendency of the finger that false rejection does not occur. Thus, the identification suitability level of a finger is only calculated from the image when registered, so that it is possible to estimate the tendency of the registered finger that false rejection does not occur.

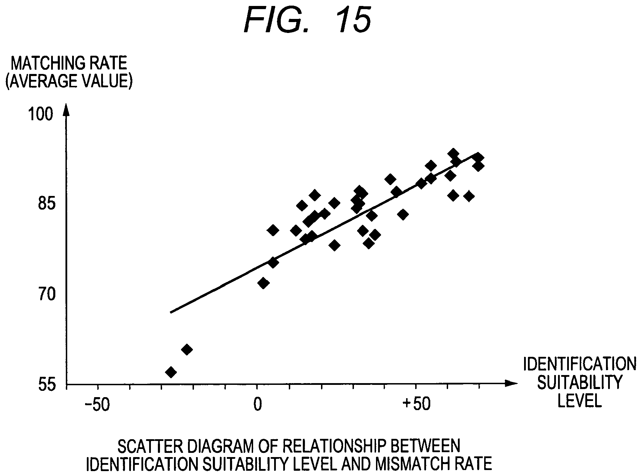

In the following, a specific example of the procedure of determining the parameters m and n of Equation (1) is shown. In this example, registered images and verified results for a long time (the matching rate) of about 40 fingers were collected for determining the values of the parameters m and n. First, the registered images were shot at the data capture device 2 shown in Fig. 2. After that, identification was performed almost everyday for about 50 days since the day of registration, and the result (the matching rate) of the verification process in performing identification was recorded. After completion of collection, the mean value of the matching rate of the same finger for 50 days was calculated. The mean value of the calculated matching rate is a value indicating the tendency of the finger that false rejection does not occur. After that, the identification suitability level is calculated while varying the combination of the values of the parameters m and n, and such values of the parameters m and n are sought that the correlation between the identification suitability level and the tendency that false rejection does not occur becomes high. Fig. 15 shows a scatter diagram illustrating the relation between the mean value of the matching rate and the identification suitability level. The vertical axis expresses the mean value of the matching rate for 50 days, and the horizontal axis expresses the identification suitability level of a finger. In the example shown in Fig. 15, the values of the parameters m and n of Equation (1) were set to m = 4 and n = 1, respectively. At this time, the correlation coefficient between the mean value of the matching rate and the identification suitability level is R = 0.86, showing that there is a high correlation. Thus, the values of the parameters m and n are determined as m = 4 and n = 1, respectively.

For the value outputted in the process of evaluating the identification suitability of a finger (S120), it may be possible that the value calculated according to Equation (1) is used as it is, or values are sorted into multiple levels in the threshold process based on the value calculated according to Equation (1) and to which level the values belongs is returned.

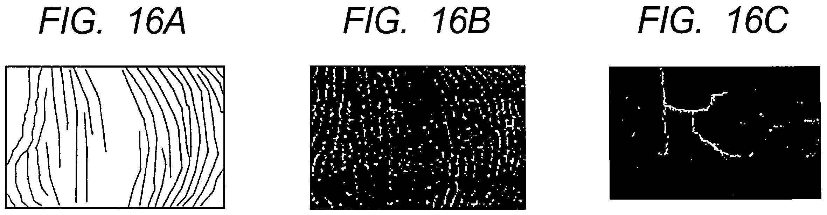

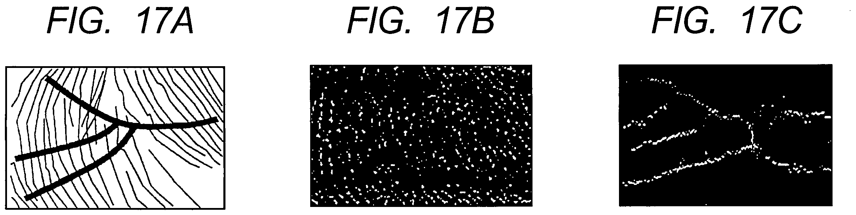

In this embodiment, the wrinkle level to adversely affect identification and the blood vessel level to favorably affect identification were combined for evaluation, in order to evaluate the identification suitability of a finger. Thus, it is possible to accurately evaluate the identification suitability of a finger. Figs. 16A to 16C and Figs. 17A to 17C show examples. Figs. 16A and 17A are registered images of different fingers. Figs. 16B and 17B show the results of detecting the positions of wrinkles from these registered images. Figs. 16C and 17C show the results of detecting the positions of blood vessels.

Wrinkles appear almost the same in two registered images of Figs. 16A and 17A. Thus, the suitability of two fingers are determined the same if attention is focused only on wrinkles to evaluate the suitability of the fingers. However, as the result of actually recording identification for a long time, it was revealed that the finger shown in Fig. 17A has a low tendency of occurrence of false rejection and a high suitability for identification. The reason why the finger shown in Fig. 17A has a low tendency of occurrence of false rejection is that the finger includes a lot of blood vessel patterns in the registered image. As described above, there is the case where accurate suitability cannot be evaluated even though attention is focused only on wrinkles in the registered image.

On the other hand, when features to adversely affect identification (wrinkles, or the like) and features to favorably affect identification (blood vessel patterns) are combined for evaluation, it is possible to distinguish between the superiority and inferiority of fingers that wrinkles appear the same and blood vessel patterns appear differently as shown in Figs. 16A to 16C and Figs. 17A to 17C. Thus, it is possible to select a finger more suitable for identification from plural registration candidates.

In the examples above, the amount and darkness of blood vessels in the image are evaluated in order to calculate the blood vessel level. It is also possible to evaluate the thickness of the blood vessel, the length of the blood vessel, the complexity of the blood vessel pattern, or the like in addition to this. It is also possible to evaluate the width of the wrinkle, the length of the wrinkles, or the like for calculating the wrinkle level other than the amount and darkness of wrinkles. It is possible to implement a more accurate identification suitability evaluation by increasing feature amounts used for evaluation and combining them appropriately.

As described above, suitability for identification is evaluated from body surface information and blood vessel information based on the shot image, so that it is possible to implement stable identification that does not tend to be affected by variation over time even though the registered image is supposed to be used for a long time.

### Second Embodiment

In this embodiment, a finger that false rejection does not occur in operating an identification system for a short time is called a finger suitable for identification. For example, in the case of installing an identification device in a locker, a user often performs identification in a few hours after registration. Identification suitability evaluation according to a second embodiment is identification suitability evaluation for a short-term operation as described above.

In identification suitability evaluation for a short-term operation, it is possible to use Equation (1) for calculating the identification suitability level shown in the first embodiment. In the case of using Equation (1) for a short-term operation, the parameters m and n are readjusted for a short-term operation. More specifically, the tendency that false rejection does not occur is in advance studied on plural fingers for a short-term operation, and the parameters m and n are adjusted in such a way that the correlation between the tendency that false rejection does not occur and the identification suitability level of the subject fingers becomes high.

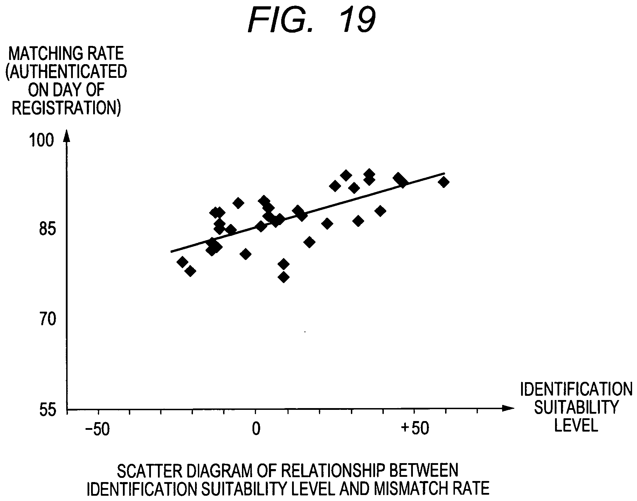

Fig. 19 is an exemplary scatter diagram illustrating the relation between the matching rate and the identification suitability level of a finger on the day of registration. Data of about 40 fingers is on the scatter diagram of Fig. 19. The vertical axis expresses the matching rate when identification is performed on the day of registration. The horizontal axis expresses the calculated identification suitability level based on Equation (1) described above. The parameters m and n of Equation (1) were determined as values that the correlation between the matching rate and the identification suitability level on the day of registration becomes the highest. More specifically, the parameters m and n of Equation (1) were set to m = 10 and n = 1, respectively.

As described above, Equation (1) for calculating the identification suitability level of a finger can be used to evaluate suitability both for a long-term operation and for a short-term operation by changing only the parameters.

It is noted that it is sufficient to make the specific gravity of the parameter n to the parameter m smaller in a short-term operation. The shape and appearance of wrinkles on the finger in the image greatly change after a long time since the registration date, whereas they do not change after a short time since the registration date. Thus, in performing identification on the day of registration, wrinkles do not affect adversely on identification so much. In determining the parameters of Equation (1), the correlation between the matching rate and the identification suitability level becomes high if the ratio of the parameter n indicating the degree of influence of wrinkles is made smaller.

For example, in the first embodiment assuming a long-term operation, the ratio between the parameters m and n was m:n = 4:1. On the other hand, in the second embodiment assuming a short-term operation, the ratio was m:n = 10:1. As described above, in switching the operation to a short-term operation, the value of the parameter n indicating the degree of influence of wrinkles is made smaller.

This embodiment shows the description considering that the device is used for a short time. However, such a configuration is also possible that the parameters can be set appropriately for the device combining the techniques of the second embodiment and the first embodiment, or that the device is provided with at least two modes, a mode for a short-term use and a mode for a long-term use.

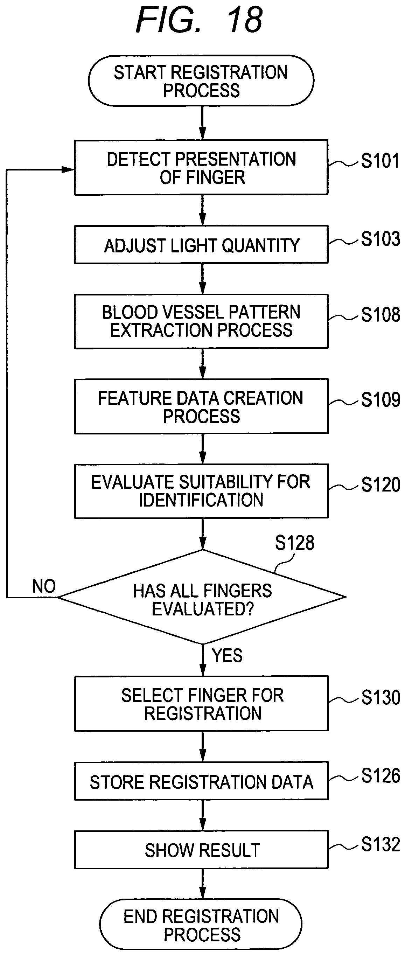

Fig. 18 is a registration process flow using the process of evaluating the identification suitability of a finger (S120). In the following, procedures will be explained in which a finger the most suitable for identification is selected from plural user's fingers for registration candidates with reference to Fig. 18.

First, a user presents any one of fingers for registration candidates on the vein data capture device 2. The identification system performs the finger presentation detection process (S101) that determines whether a finger is presented on the device 2. When the presentation of the finger is detected, the light quantity adjusting process (S103), the pattern extraction process (S108), and the feature data creation process (S109) are performed. After that, the suitability of the presented finger is evaluated (S120). At this time, the identification system stores the evaluated result of suitability for identification (the identification suitability level) and feature data in the memory 12. After that, the identification system again returns to the finger presentation detection process (S101). The user presents a second finger. The identification system in turn performs the finger presentation detection process (S101), the light quantity adjusting process (S103), the blood vessel pattern extraction process (S108), the feature data creation process (S109), and the process of evaluating the identification suitability of a finger (S120) for the second finger. After that, the evaluated result and feature data are stored in the memory 12. The flow from the process S101 to the process S120 in Fig. 18 are repeated until the evaluation of all the registration candidate fingers is completed. When the evaluation of all the registration candidate fingers is completed, the flow goes to a registered finger selection process (S130). In the registered finger selection process (S130), comparison is made for the identification suitability level of all the registration candidate fingers stored in the memory 12. As a result of comparison, a finger with the highest identification suitability level is determined as a registered finger. After that, the feature data of the finger selected for a registered finger is stored (S126). Lastly, information about the finger selected for a registered finger is presented to the user (S132). More specifically, the user is presented at which ordinal position the registered finger is presented on the device 2. In association with this presentation, it is also possible to present the evaluated result of the identification suitability of the registered finger or the evaluated result of the identification suitability of a finger other than the registered finger, for example.

It is possible to select and register the best finger from plural registration candidate fingers by following the flow described above. Thus, it is possible to implement a highly accurate identification.

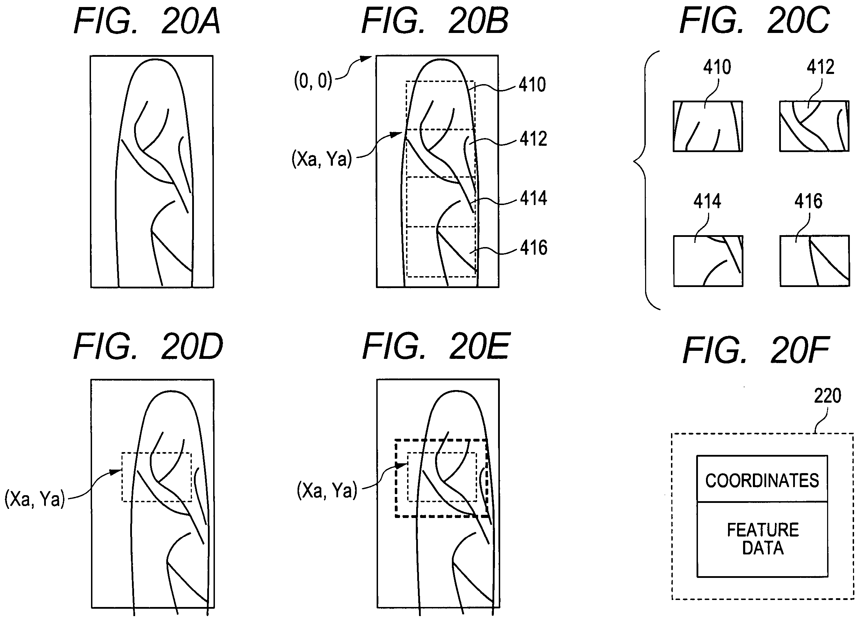

Fig. 20A is an exemplary image shot at the vein data capture device 2. Fig. 20B is an exemplary method of dividing an image. Fig. 20C is images divided according to the dividing method of Fig. 20B.

The process of evaluating the identification suitability of a finger (S120) can also be performed for partial regions of a finger shown in Fig. 20C. When partial regions are evaluated for identification suitability, the capacity of registration data can be made smaller while suppressing deterioration of identification accuracy. In the following, a process flow for reducing the capacity of registration data will be explained.

In a registration process, the veins of a finger is shot in a wide area as shown in Fig. 20A. After shot, the image is divided to obtain plural partial images as shown in Fig. 20C. The partial images are evaluated for identification suitability to select one region with the highest identification suitability level from the plural partial images. After selected, feature data is created from the image of the selected region. The created feature data is stored in the storage device 14. At this time, the position (the coordinates) of the selected region is also stored in the storage device 14. In the examples shown in Fig. 20C, it is determined that a partial image 412 has the highest identification suitability level, and feature data created from the partial image 412 and the coordinates (Xa, Ya) of the partial image 412 are stored in the storage device 14. Data combining feature data and the position (the coordinates) is called registration data 220 (Fig. 20F).

In an identification process, the veins of the entire finger are shot as similar to the registration process. An image on the same coordinates as the registration data is located is cut out of the shot identification image (Fig. 20D). Alternatively, it is also possible to cut out a region with a certain margin in consideration of the position shift of the finger between when the finger is registered and when the finger is verified (Fig. 20E). Thus, it is possible to perform identification robust against a position shift. Feature data for identification is created based on the cut image, and registration data is verified against identification data. It is determined whether the finger is the same finger or a different finger from the verified result, and the identification process is ended.

As discussed above, only the partial region of the shot image is used to create registration data, so that it is possible to reduce the size of registration data. Thus, it is possible to increase the number of items of registerable registration data. Identification accuracy deteriorates greatly if the region used for registration data is simply narrowed. However, a region with a high identification suitability level is found in the shot image and registration data is created based on the image of this region. Thus, it is possible to cope with reducing the size of registration data and a highly accurate identification.

In the examples shown in Figs. 20A to 20F, only one region with the highest identification suitability level is selected from four partial regions to create registration data. However, it is also possible to select a plurality of regions in order of descending identification suitability level for registration. In the identification process, plural items of identification data are created based on images of plural partial regions corresponding to the individual items of registration data to verify the corresponding regions against each other.

False rejection sometimes occurs if an identification device is used for a long time. One of the causes is a change in the way to place a finger. In the case where identification is performed immediately after registration or within a few days after registration, a user can repeat almost the same way to place the finger when registered because the user remembers the way to place the finger when registered. However, the user forgets the way to place the finger when registered after a certain period elapses since the registration date, so that the user sometimes cannot repeat the same way to place the finger when registered. Moreover, since many users tend to carefully handle the identification device immediately after registration or within a few days, the users can present the finger at a correct position at the projection 21 for positioning. However, the users place the finger roughly little by little while continuously using the identification device, so that the users sometimes present the finger in an incorrect way to place the finger. In the verification process (S112), although such a scheme is used that differences in the way to place the finger are accepted to some extent, it is determined that the finger is a different finger even tough the finger is the same finger if the way to place the finger changes greatly to exceed the tolerance of the position shift or pressing.

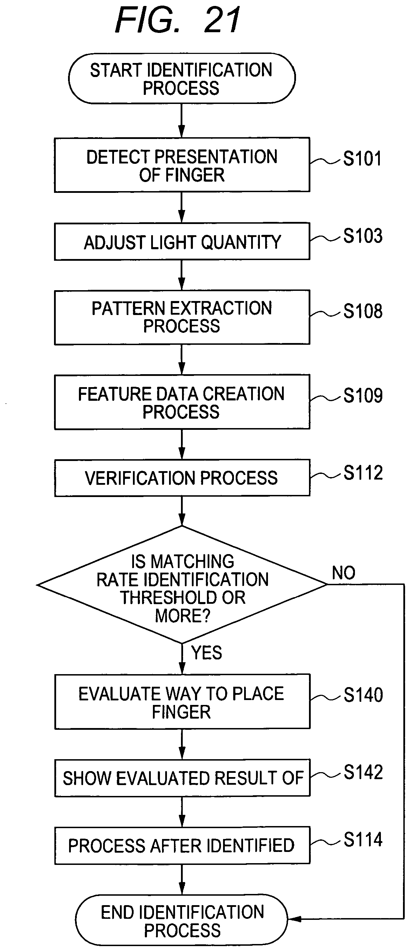

In order to address this problem, the way to place a finger when verified is evaluated, and the evaluated result is presented to a user. Fig. 21 is an identification process flow for preventing false rejection. In the following, the identification process flow will be explained.

When the user presents a finger, the finger presentation detection process (S101), the light quantity adjusting process (S103), the pattern extraction process (S108), and the feature data creation process (S109) are performed. After that, the verification process (S112) is performed to calculate the matching rate of images between when the finger is registered and when the finger is verified. If the calculated matching rate is lower than an identification threshold 33, it is determined that the finger is a different finger. If it is determined that the finger is a different finger, the result is presented to the user, and the identification process is ended. If the calculated matching rate is the identification threshold or more, it is determined that the finger is the same finger. If it is determined that the finger is the same finger, the way to place the finger is evaluated (S140). In evaluating the way to place the finger (S140), it is evaluated whether the way to place the finger when verified is the same as the way when registered. After that, the result is presented to the user (S142). For the method of presenting the result, there are a method in which the sound outputter 6 putouts sounds to present the result, a method in which the result is displayed on the display 17, and others. After that, a lock is cleared, for example, for the process after identified (S114).

For the method of evaluating the way to place the finger (S140), a method can be used that positions of vein patterns are compared between registration data 220 and identification data 240 to calculate the amount of the position shift of the finger and the way to place the finger is determined depending on the size of the position shift. For another scheme, there is a method of using the matching rate calculated in the verification process (S112). If a change between the way to place the finger when registered and the way when verified is small, the calculated matching rate also takes a high value in the verification process. If the way to place the finger changes greatly, the matching rate is low. Thus, it is possible to evaluate the way to place the finger when verified using the matching rate. If the matching rate is higher than a threshold 45 for evaluating the way to place the finger, it is determined that the finger is placed in almost the same way to place the finger when registered, whereas if the matching rate is lower than threshold 45, it is determined that the way to place the finger greatly changes. It is noted that the threshold 45 for evaluating the way to place the finger is set higher than the identification threshold 33.

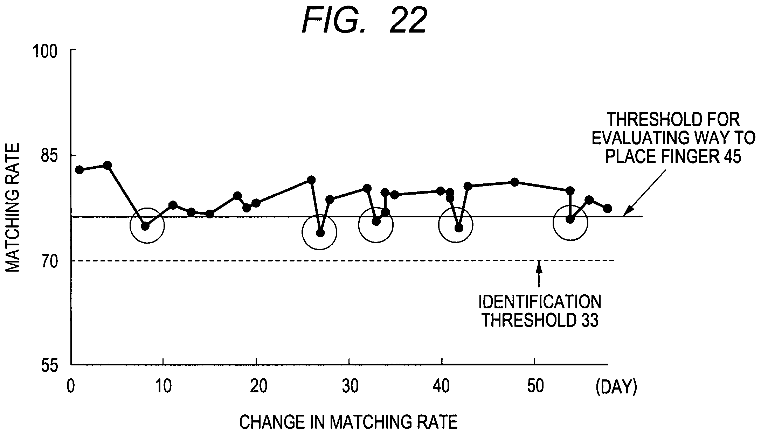

Fig. 22 shows the measurements of the verified result (the matching rate) in using an identification system adopting the evaluation of the way to place the finger for a long time. The vertical axis expresses the matching rate, and the horizontal axis expresses the number of days since the registration date. In the measurements, the matching rate of a single finger was recorded for two months. An identification threshold 33 of the identification system for use in measurements was set to a matching rate of 70%. A threshold 45 for evaluating the way to place the finger was set to a matching rate of 75%. It is noted that the identification system for use in measurements gives an alarm in sounds to a subject when the matching rate is below the threshold 45 for evaluating the way to place the finger.

In the graph of Fig. 22, a day indicated by a circle is a day that the matching rate is below the threshold 45 for evaluating the way to place the finger. An alarm is given to the user this day. It was confirmed from the graph of Fig. 22 that the matching rate tends to become high after an alarm is given. Thus, it was confirmed that it is useful to evaluate the way to place the finger and to present the result to the user in order to prevent the matching rate from reducing.

As described above, the way to place the finger is evaluated and the result is presented to the user, so that the user can notice that the way to place the finger changes from the way when registered. The user places the finger carefully, or the user again registers the finger, so that it is possible to prevent false rejection from occurring.

The identification device according to the present invention can be applied to a mobile device such as a mobile telephone terminal, a personal digital assistant (PDA), and a personal computer (PC), a safe, a locker, an automobile, and an access control device.

## Claims

1. A personal identification system comprising:
a light source (3);
an imager (4) configured to capture an image of light transmitted through a finger;
input means (19) for receiving input from a user or an administrator; and
a processor (10) configured to perform registration of a blood vessel pattern extracted from the captured image and identification by comparing the extracted blood vessel pattern and a previously registered blood vessel pattern,
wherein the processor, when performing registration of an extracted blood vessel pattern, is adapted
to calculate a wrinkle level as a value indicating the overall amount and darkness of wrinkles on the finger surface in the extracted blood vessel pattern and a blood vessel level as a value indicating the overall amount and darkness of blood vessels in the extracted blood vessel pattern by distinguishing wrinkles from blood vessels via their respective line thicknesses in the extracted blood vessel pattern, wherein blood vessels correspond to thick lines and wrinkles correspond to thin lines,
to evaluate suitability for identification from the wrinkle level and the blood vessel level by calculating an identification suitability result, wherein the identification suitability result varies proportionally with the blood vessel level and inversely with the wrinkle level;
to present the identification suitability result to the user or the administrator in order to allow him to input through the input means a selection of whether the blood vessel pattern extracted from the captured image is to be registered; and,
if the user or the administrator has selected to the registration of the blood vessel pattern extracted from the captured image, to register the blood vessel pattern.

2. The personal identification system according to claim 1, further comprising:
a storage (14) configured to store wrinkle information and blood vessel information.

3. The personal identification system according to claim 1 or 2, further comprising:
a display (17) or a sound presenter (6) configured to present the identification suitability result.

## Patentansprüche

1. Personenidentifizierungssystem, umfassend:
eine Lichtquelle (3);
eine Bildgebungseinrichtung (4), die dazu eingerichtet ist, ein Bild von Licht zu erfassen, das einen Finger durchlaufen hat;
eine Eingabeeinrichtung (19) zum Empfangen einer Eingabe von einem Benutzer oder einem Administrator und
einen Prozessor (10), der dazu eingerichtet ist, Registrierung eines aus dem erfassten Bild extrahierten Blutgefäßmusters und Identifizierung durch Vergleichen des extrahierten Blutgefäßmusters und eines zuvor registrierten Blutgefäßmusters auszuführen,
wobei der Prozessor, wenn er die Registrierung eines extrahierten Blutgefäßmusters ausführt, dazu ausgelegt ist,
ein Faltenniveau als einen Wert, der die Gesamtmenge und Dunkelheit von Falten auf der Fingeroberfläche im extrahierten Blutgefäßmuster angibt, und ein Blutgefäßniveau als einen Wert, der die Gesamtmenge und Dunkelheit von Blutgefäßen im extrahierten Blutgefäßmuster angibt, durch Unterscheidung zwischen Falten und Blutgefäßen mittels ihrer jeweiligen Liniendicken im extrahierten Blutgefäßmuster zu berechnen, wobei Blutgefäße dicken Linien entsprechen und Falten dünnen Linien entsprechen,
die Eignung zur Identifizierung aus dem Faltenniveau und dem Blutgefäßniveau durch Berechnen eines Identifizierungseignungsergebnisses auszuwerten, wobei das Identifizierungseignungsergebnis proportional mit dem Blutgefäßniveau und invers mit dem Faltenniveau variiert;
das Identifizierungseignungsergebnis dem Benutzer oder dem Administrator zu präsentieren, um ihm über die Eingabeeinrichtung die Eingabe einer Auswahlentscheidung darüber zu ermöglichen, ob das aus dem erfassten Bild extrahierte Blutgefäßmuster zu registrieren ist, und,
falls der Benutzer oder der Administrator die Registrierung des aus dem erfassten Bild extrahierten Blutgefäßmuster ausgewählt hat, das Blutgefäßmuster zu registrieren.

2. Personenidentifizierungssystem nach Anspruch 1, ferner umfassend:
einen Speicher (14), der dazu eingerichtet ist, Falteninformationen und Blutgefäßinformationen zu speichern.

3. Personenidentifizierungssystem nach Anspruch 1 oder 2, ferner umfassend:
eine Anzeige (17) oder eine Tonwiedergabeeinrichtung (6), die dazu eingerichtet sind, das Identifizierungseignungsergebnis zu präsentieren.

## Revendications

1. Système d'identification personnelle comprenant :
une source de lumière (3) ;
un imageur (4) configuré pour capturer une image de lumière transmise à travers un doigt ;
un moyen d'entrée (19) pour recevoir une entrée d'un utilisateur ou d'un administrateur ; et
un processeur (10) configuré pour effectuer un enregistrement d'un motif de vaisseaux sanguins extrait de l'image capturée et une identification en comparant le motif de vaisseaux sanguins extrait et un motif de vaisseaux sanguins précédemment enregistré,
dans lequel le processeur, lors de l'exécution de l'enregistrement d'un motif de vaisseaux sanguins extrait, est adapté
à calculer un niveau de rides comme une valeur indiquant la quantité globale et la noirceur de rides sur la surface de doigt dans le motif de vaisseaux sanguins extrait et un niveau de vaisseaux sanguins comme une valeur indiquant la quantité globale et la noirceur de vaisseaux sanguins dans le motif de vaisseaux sanguins extrait en distinguant les rides des vaisseaux sanguins par leurs épaisseurs respectives de lignes dans le motif de vaisseaux sanguins extrait, dans lequel les vaisseaux sanguins correspondent à des lignes épaisses et les rides correspondent à des lignes fines,
à évaluer une convenance pour identification à partir du niveau de rides et du niveau de vaisseaux sanguins en calculant un résultat de convenance pour identification, dans lequel le résultat de convenance pour identification varie proportionnellement avec le niveau de vaisseaux sanguins et inversement avec le niveau de rides ;
à présenter le résultat de convenance pour identification à l'utilisateur ou l'administrateur afin de lui permettre d'entrer par l'intermédiaire du moyen d'entrée une sélection de si le motif de vaisseaux sanguins extrait de l'image capturée doit être enregistré ; et
si l'utilisateur ou l'administrateur a sélectionné l'enregistrement du motif de vaisseaux sanguins extrait de l'image capturée, à enregistrer le motif de vaisseaux sanguins.

2. Système d'identification personnelle selon la revendication 1, comprenant en outre :
un stockage (14) configuré pour stocker des informations de rides et des informations de vaisseaux sanguins.

3. Système d'identification personnelle selon la revendication 1 ou 2, comprenant en outre :
un afficheur (17) ou un présenteur sonore (6) configuré pour présenter le résultat de convenance pour identification.
